# EUROPEAN PATENT APPLICATION

(11) **EP 1 935 857 A1**
(43) Date of publication of application: **25.06.2008**
(21) Application number: 07425545.6
(22) Date of filing: 30.08.2007
(51) Int. Cl.: C03B 33/07

(54) **System for laminated glass engraving/cutting/breaking**

(30) Priority: 24.10.2006 IT CH20060038
(71) Applicant: Cericola, Carlo, 66020 Paglieta (CH) (IT)
(72) Inventor: Cericola, Carlo, 66020 Paglieta (CH) (IT)

(57) **Abstract**

The invention is about a laminated glass engraving/cutting/breaking system using a mechanical system (blades, diamond cutting wheels or similar) associated with a laser system useful for pvb, plastics or composite material contained in the laminated glass.

## Description

The invention is about a laminated glass engraving/cutting/breaking system using a mechanical system (blades, diamond cutting wheels or similar) associated with a laser system useful for pvb, plastics or composite material contained in the laminated glass.

### TECHNICAL ASPECTS and PHYSICAL FUNCTIONING LAW

The laminated glass cutting tables existing in the market at this moment, are using the following working way:
a) Laminated glass engraving with a diamond cutting wheels' system sliding over and under the glass sheets
b) Breaking glass with mechanical system
c) Heating bar reducing the hardness of pvb, plastics or composite interlaminar material contained in the laminated glass
d) If the thickness of pvb, plastic or composite material is higher than 0,76 mm the cut is completed using the blade.

### INVENTION'S AIM

The invention's aim is to define an engraving/cutting/breaking way of laminated glass, pvb, plastic material or composite material contained in the laminated glass, using a mechanical system (blade, diamond cutting wheels or similar) and a laser ray according to the following method:
e) Glass engraving with a mechanical system (blade, diamond cutting wheels or similar) sliding over and under the glass sheets
f) Glass breaking with mechanical system
g) Direct cut of pvb, plastic or composite interlaminar material, with a laser system

The lightning ray is a photon's beam where the light's waves have all the same direction and wavelength and the typical feature is to converge very powerful energies on least surfaces (1/1000 of millimeter diameter) in order to obtain, locally, very high temperatures; this lightning ray is conveyed on the cutting line of pvb, plastics or composite contained in the laminated glass through a serie of mirrors. The increasing temperature causes the melting and/or vaporization of the interaction area and so it can guarantee a perfect cutting line.

### ADVANTAGES

1) Considerable shortness of working times compared with the other methods nowadays used in the market. Indeed, the working cycle for a laminated glass sheet cutting passes from 30"seconds to a cycle of few seconds
2) Good finishing of surfaces obtained from the cut thanks to the fact that on the laminated cutting line there is no pvb, plastic or composite material residual left.
3) High productivity
4) No connection between tools and the cut piece
5) High speed and working cycle repeatability
6) Production wasters' reduction
7) Tight and parallel cutting edges endowed with an excellent finishing
8) Reduction of the thermically modified area
9) Capability of working on complex outlines with reduced curvature rays
10) No mechanical bias on the cut piece
11) Cutting capability independent from the material hardness
12) High precision cutting level:1/10 mm for thicknesses until 40-50 mm
13) No need of further working processes
14) Reduced width of the cutting groove: poor quantity of the removed material
15) Maximum exploitation of the material to be cut
16) Reduced operating costs

### The invention is described in detail with the help of the pictures which represent an execution example.

### Pict. 1 shows in details the schematic view of the glass/pvb cutting device:

- Bracket for laser spring 1
- laser spring 2
- laser beam 3
- mirror reflectivity transmission 4
- flat convex lens 5
- pvb 6
- laminated glass 7

### Pict. 2 shows the schematic view of the device and the laminated glass engraving/cutting/breaking system formed by:

- cutting table of the device 1
- bridge with sliding system 2
- bridge carriage 3
- laser and mechanical engraving/cutting/breaking system

### DYNAMICS DESCRIPTION

First of all you have to program the device with the laminated glass cutting operations to carry out; after that, the upper and lower cutting wheels, or similar, slide along the cutting line engraving the glass. Then a mechanical system makes the glass sheet division along the above mentioned line. Using a powerful laser system, a least slope is sufficient for a least sheet division in order to allow to enter into the crack and define the complete cut of pvb, plastics or composite material contained in the laminated glass.

### FULFILMENT'A ALTERNATIVES

Following further alternatives, that is fulfilment's ways concerning the described solution (claimed by us), the device may be realized with technical and mechanical equivalents or enriched with further integrative particulars and also the realization of the elements may vary to suit the goal.

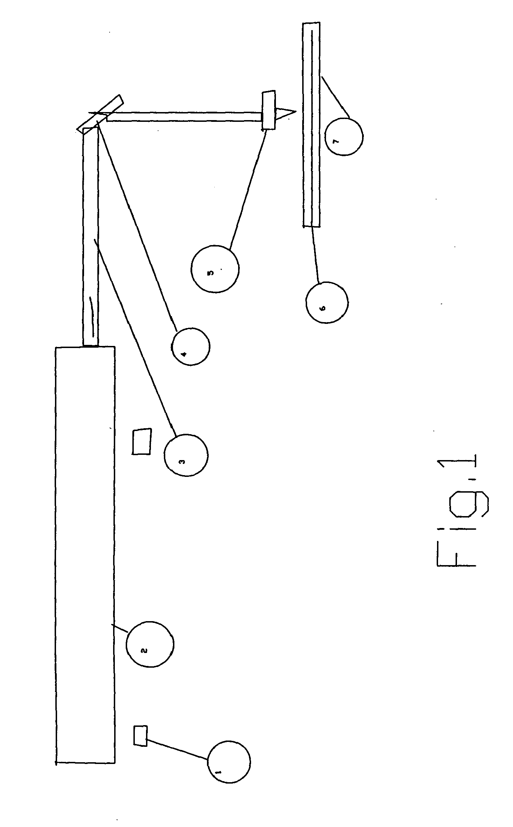

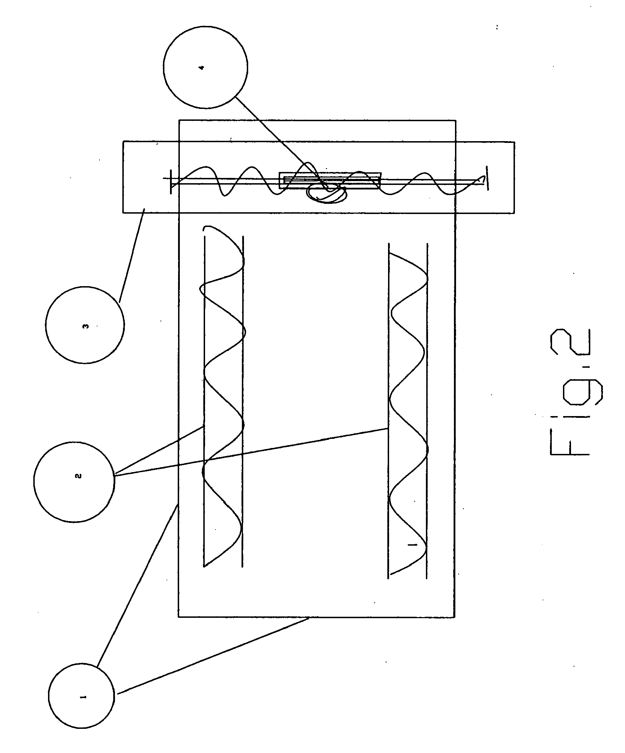

## Claims

1. Laminated glass engraving/cutting/breaking system using a mechanical system (blades, diamond cutting wheel or similar) associated with a laser system for pvb, plastics, composite material contained in the laminated glass.
